# EUROPÄISCHE PATENTANMELDUNG

(11) **EP 4 537 925 A1**
(43) Veröffentlichungstag der Anmeldung: **16.04.2025**
(21) Anmeldenummer: 23202369.7
(22) Anmeldetag: 09.10.2023
(51) Int. Cl.: B01D 53/22

(54) **VERFAHREN ZUM NACHRÜSTEN EINES SYSTEMS ZUR SCHWACHGASVERWERTUNG UND SYSTEM ZUR SCHWACHGASVERWERTUNG**

(71) Anmelder: Axiom Angewandte Prozeßtechnik Ges. m.b.H., 2483 Ebreichsdorf (AT)
(72) Erfinder: Die Erfindernennung liegt noch nicht vor
(74) Vertreter: SONN Patentanwälte GmbH & Co KG

(57) **Zusammenfassung**

Die Erfindung betrifft ein Verfahren zum Nachrüsten eines Systems (Sₐₗₜ) zur Schwachgasverwertung, das eine thermische Nachbehandlungseinheit (T) aufweist, wobei das System (Sₐₗₜ) zur Schwachgasverwertung dazu eingerichtet ist, das durch diese Nachbehandlungseinheit (T) thermisch nachbehandelte Schwachgas direkt in die Umwelt zu leiten, umfassend das Ersetzen der thermischen Nachbehandlungseinheit (T) durch eine erste Membraneinheit (1) zur Nachbehandlung des Schwachgases, so dass das auf diese Weise nachgerüstete System (Sₙₑᵤ) dazu eingerichtet ist, zumindest einen Teil des Permeats der ersten Membraneinheit (1) direkt in die Umwelt zu leiten. Ferner betrifft die Erfindung ein System (Sₙₑᵤ) zur Schwachgasverwertung, aufweisend eine erste Membraneinheit (1) zur Nachbehandlung des Schwachgases, wobei das System (Sₙₑᵤ) dazu eingerichtet ist, zumindest einen Teil des Permeats der ersten Membraneinheit (1) direkt in die Umwelt zu leiten.

## Beschreibung

Die vorliegende Erfindung betrifft Verfahren zum Nachrüsten von Systemen zur Schwachgasverwertung sowie Systeme zur Schwachgasverwertung.

Schwachgase sind Brenngas-Gemische mit reduziertem Heizwert (z.B. unter 8,5 MJ/m³), die brennbaren Gase (für gewöhnlich Methan oder andere gasförmige Kohlenwasserstoffe, wie Wasserstoff und/oder Kohlenmonoxid) sind im Schwachgas mit nicht brennbaren Komponenten, wie z. B. Stickstoff (aus der Luft), Wasserdampf oder Kohlendioxid so stark verdünnt, dass eine selbstständige, stabile Oxidation (Verbrennung) nur mit hohem technischen und finanziellen Aufwand umgesetzt werden kann. Schwachgase sind zumeist frei von bzw. arm an Sauerstoff. Zur direkten Verbrennung ist es daher erforderlich, den prozentualen Anteil an Sauerstoff im Schwachgas soweit zu erhöhen, bis das resultierende Gasgemisch aus Sauerstoff und Schwachgas brennbar ist.

Schwachgase entstehen beispielsweise bei der biologisch-enzymatischen, anaeroben Zersetzung von organischem Material wie Klärschlamm und Gülle (Faulgas, Biogas) oder auf Mülldeponien (Deponiegas). Auch Kuppelgase aus der Montanindustrie werden bei geringem Heizwert als Schwachgas bezeichnet. Ebenso wird das bei der Holzvergasung entstehende Produktgas in der Literatur häufig als Schwachgas (LCV - low calorific value - gas) bezeichnet. Schwachgase entstehen auch im Bergbau bzw. in stillgelegten Bergwerken, insbesondere bei der Absaugung von Grubengas (wenn der Methangehalt des abgesaugten Grubengases beispielsweise 20 Vol.-% beträgt). Ein derartiges Schwachgas wäre vom Methangehalt her zwar theoretisch von alleine brennbar, enthält jedoch keinen Sauerstoff. Bei Zumischung von genügend Sauerstoff für die Verbrennung, beispielsweise in Form von Luft, fällt die Methankonzentration notwendigerweise auf unter 17,5 Vol.-%, wodurch für die Verbrennung dieses Gases Spezialbrenner zum Einsatz kommen müssen. Ein Beispiel dafür ist der sogenannte EFLOX-Brenner, mit dem eine Verbrennung eines Gasgemisches mit zwischen 2,5 und 17,5 Vol.-% Methan ohne Zusatzbrennstoff möglich ist.

Neuerdings kommen zunehmend Schwachgase auch als Abfallprodukt (Offgas) von Biogasaufbereitungsanlagen vor, wobei diese Offgase überwiegend nicht unbehandelt in die Atmosphäre abgelassen werden dürfen. Die Konzentration der brennbaren Komponente CH₄ im Offgas wurde im Zuge der raschen technologischen Entwicklung der verschiedenen Aufbereitungstechnologien von ursprünglich 5-10 Vol.-%, bei welcher Konzentration der EFLOX-Brenner sehr gut funktionierte, auf bis zu 0,5 Vol.-% abgesenkt, bei welcher Konzentration der EFLOX-Brenner nicht mehr funktioniert.

Allgemein nachteilig an Schwachgas ist, dass es aufgrund seines niedrigen Methangehalts thermisch nur schwierig zu verwerten ist, zur Strom- bzw. Energiegewinnung müssen Zündstrahlmotoren eingesetzt werden. Herkömmliche Gasmotoren benötigen zum Zwecke der Verstromung ein brennfähiges Gasgemisch, Motoren von Blockheizkraftwerken können mit einem Brenngas enthaltend bis ca. 38 Vol.-% CH₄ wirtschaftlich betrieben werden, Mikrogasturbinen bis 30 Vol.-%. Möglich ist daher die Verstromung von Grubengas oder vergleichbarer Gasarten mit einer minimalen CH₄-Konzentration von etwa 30 Vol.-%. Bei CH₄-Konzentrationen unterhalb dieses Grenzwertes ist eine Verstromung bzw. der Betrieb eines Gasmotors nur eingeschränkt, mit hohen Kosten verbundenem hohen technischen Aufwand bzw. gar nicht möglich.

Andererseits kann das oben beschriebene Schwachgas mit einer Methankonzentration von beispielsweise unter 17,5 Vol.-% oder auch unter 2,5 Vol.-% bzw. unter 0,5 Vol.-% nicht ohne weiteres in die Atmosphäre abgeblasen werden, da Methan aufgrund seiner hohen Wirkung (25-mal so wirksam wie CO₂) mit rund 20 % zum anthropogenen Treibhauseffekt beiträgt, die Verweildauer von Methan in der Atmosphäre ist jedoch mit 9 bis 15 Jahren deutlich kürzer als bei CO₂. Der globale mittlere Methan-Gehalt der Atmosphäre hat sich seit vorindustriellen Zeiten (1750) von rund 600 ppb auf 1.750 ppb im Jahr 1999 erhöht. Im Zeitraum von 1999 bis 2006 blieb der Methan-Gehalt der Atmosphäre weitgehend konstant, steigt aber seit 2007 wieder signifikant auf über 1800 ppb.

Um nun die Methankonzentration des in die Umwelt geleiteten Offgases entsprechend der Umweltauflagen reduzieren, wird das Abgas üblicherweise durch thermische Nachbehandlungseinheiten oxidiert. Hierzu sind z.B. wie bereits erwähnt bis zu einer Methankonzentration bis zu 2,5 Vol.-% sog. FLOX-Brenner, d. h. Brenner mit einer flammenlosen Oxidation, und bis zu einer Methankonzentration von bis zu 0,5 Vol.-% sogenannte RTO-Brenner (Regenerative Thermische Oxidation) oder die katalytische Nachverbrennung (KNV) bekannt.

Ein verbessertes Verfahren bzw. eine verbesserte Vorrichtung zur Verwertung von Schwachgas wird in der EP 2 762 220 A1 offenbart. Diese betrifft ein Verfahren zur Verwertung von Schwachgas, umfassend die Verringerung des CO₂-Anteils im Schwachgas und/oder den Austausch von Gasanteilen im Schwachgas gegen O₂ in einer Membrantrenneinheit und anschließender Verwertung des Retentats in einer der Membrantrenneinheit retentatseitig nachgeschalteten Verwertungseinheit (wie einer thermischen Nachbehandlungseinheit), dadurch gekennzeichnet, dass das Permeat der Membrantrenneinheit dem heißen Abgas der Verwertungseinheit beigemengt und nachoxidiert wird. Ferner wird darin eine Vorrichtung zur Verwertung von Schwachgas durch Auftrennung eines Feedgases mittels Gaspermeation in Retentat und Permeat mit mindestens einer Membrantrenneinheit mit einer Gaseingangsleitung, einer Retentatausgangsleitung und einer Permeatausgangsleitung, wobei die Retentatausgangsleitung mit einer Verwertungseinheit und die Verwertungseinheit abgasseitig über eine Leitung mit einem Nachbrenner leitungsmäßig verbunden ist, dadurch gekennzeichnet, dass die Membrantrenneinheit permeatseitig eine Permeatausgangsleitung aufweist, welche mit einem im Abgasstrom der Verwertungseinheit angeordneten Nachbrenner leitungsmäßig verbunden ist.

Mittlerweile hat sich jedoch in der Praxis herausgestellt, dass der Betrieb von thermischen Nachbehandlungseinheiten wie beispielsweise RTO-Brennern sehr aufwändig ist. Daher besteht Bedarf nach alternativen Schwachgasverwertungssystemen, welche dennoch die (immer strenger werdenden) Umweltauflagen erfüllen.

Somit ist es eine Aufgabe der vorliegenden Erfindung, Verfahren und Systeme zur Schwachgasverwertung zur Verfügung zu stellen, die ohne thermische Nachbehandlungseinheiten auskommen.

Die vorliegende Erfindung stellt ein Verfahren zum Nachrüsten eines Systems zur Schwachgasverwertung, das eine thermische Nachbehandlungseinheit aufweist, zur Verfügung. Dieses System zur Schwachgasverwertung ist (vor dem Nachrüsten) dazu eingerichtet, das durch diese Nachbehandlungseinheit thermisch nachbehandelte Schwachgas direkt in die Umwelt zu leiten. Das Verfahren umfasst das Ersetzen der thermischen Nachbehandlungseinheit durch eine erste Membraneinheit zur Nachbehandlung des Schwachgases, so dass das auf diese Weise nachgerüstete System dazu eingerichtet ist, zumindest einen Teil des Permeats der ersten Membraneinheit direkt in die Umwelt zu leiten.

In einem weiteren Aspekt stellt die Erfindung ein System zur Schwachgasverwertung zur Verfügung, das eine erste Membraneinheit zur Nachbehandlung des Schwachgases aufweist. Dieses System ist dazu eingerichtet, zumindest einen Teil des Permeats der ersten Membraneinheit direkt in die Umwelt zu leiten. Ein solches System kann z.B. durch Nachrüsten eines bestehenden, herkömmlichen Systems zur Schwachgasverwertung erhalten werden (z.B. wie hierin beschrieben) oder mittels Neukonstruktion.

In noch einem weiteren Aspekt wird die Verwendung dieses Systems zur Trennung von Schwachgas mit einem Anteil von mehr als 50 Vol.-%, vorzugsweise mehr als 55 Vol.-%, 60 Vol.- %, 65 Vol.-%, 70 Vol.-%, 75 Vol.-%, 80 Vol.-%, 85 Vol.-%, insbesondere bevorzugt mehr als 90 Vol.-% bzw. 95 Vol.-% CH₄/CO₂ und mit einer Methankonzentration nicht über 30 Vol.-% in CH₄-dominiertes Produktgas und CO₂-dominiertes Offgas zur Verfügung stellt. Das Offgas aus der ersten Membraneinheit (des Systems) wird (direkt) in die Umwelt geleitet. Vorzugsweise beträgt der CO₂-Anteil im Offgas mehr als 99%, bevorzugt mehr als 99,5%, noch mehr bevorzugt mehr als 99,75%, insbesondere mehr als 99,8% oder gar mehr als 99,9%. Vorzugsweise macht CH₄ zumindest die Hälfte der restlichen 1%-0,1% aus.

In einem letzten Aspekt betrifft die Erfindung ein Verfahren zur Auftrennung von Schwachgas mit einem Anteil von mehr als 50 Vol.- %, vorzugsweise mehr als 55 Vol.-%, 60 Vol.-%, 65 Vol.-%, 70 Vol.-%, 75 Vol.-%, 80 Vol.-%, 85 Vol.-%, insbesondere bevorzugt mehr als 90 Vol.-% bzw. 95 Vol.-% CH₄/CO₂ und mit einer Methankonzentration nicht über 30 Vol.-% in Produktgas und Offgas mittels Gaspermeation durch das obige System, wobei das Permeat der ersten Membraneinheit teilweise im Gleichstrom und teilweise im Gegenstrom gewonnen wird und das im Gegenstrom gewonnene Permeat als Offgas in die Umwelt geleitet wird. Vorzugsweise beträgt der CO₂-Anteil im Offgas mehr als 99%, bevorzugt mehr als 99,5%, noch mehr bevorzugt mehr als 99,75%, insbesondere mehr als 99,8% oder gar mehr als 99,9%. Vorzugsweise macht CH₄ zumindest die Hälfte der restlichen 1%-0,1% aus.

Überraschenderweise hat sich im Zuge der vorliegenden Erfindung herausgestellt, dass die thermische Nachbehandlungseinheit durch eine Membraneinheit wie hierin beschrieben ersetzt werden kann, und dennoch die immer strenger werdenden Umweltauflagen erfüllt werden. Auf Grundlage dieser Beobachtung können sowohl neue Systeme zur Schwachgasverwertung, die keine thermische Nachbehandlungseinheit mehr benötigen, konstruiert werden als auch bestehende Systeme mit thermischer Nachbehandlungseinheit so nachgerüstet werden, dass fortan auf den Betrieb der thermischen Nachbehandlungseinheit verzichtet werden kann.

Bei Gaspermeationsmembraneinheiten (hierin auch Membraneinheiten genannt) erfolgt die Trennung von Produktgas und Offgas mittels Permeation, wobei ein beispielsweise an Produktgas angereichertes Retentat und ein an Offgas angereichertes Permeat gewonnen werden können. Die Konzentrationen an Produktgas im Retentat und Offgas im Permeat sind unter anderem von den jeweils angewendeten Prozess-Parametern abhängig, generell ist für eine erhöhte Produktgas-Qualität immer ein erhöhter Energieeinsatz erforderlich (wegen höherem Druck, niedrigerer Ausbeute in Bezug auf eingesetztes Feedgas, etc.).

Üblicherweise sind Systeme zur Auftrennung eines Gasgemisches in Produktgas und Offgas mittels Gaspermeation derart aufgebaut, dass das druckbeaufschlagte Feedgas in einer Membraneinheit in das Retentat und in das Permeat aufgetrennt werden, wobei beispielsweise das Retentat das Produktgas und das Permeat das Offgas enthält.

In einer bevorzugten Ausführungsform ist das Verfahren derart ausgestaltet, dass die erste Membraneinheit einen Gaseingang für das durch die erste Membraneinheit nachzubehandelnde Schwachgas, welches durch die Nachbehandlung in Produktgas und Offgas aufgetrennt wird, einen Retentatausgang für das Produktgas, wobei der Retentatausgang vorzugsweise im Zuge des Nachrüstens mit dem System verbunden wird, und einen ersten Permeatausgang zur Ableitung von Offgas in die Umwelt aufweist. Im Zuge des Nachrüstens wird der Gaseingang mit dem System zur Schwachgasverwertung leitungsmäßig verbunden. Mit anderen Worten wird also die erste Membraneinheit zum Teil des (nachgerüsteten) Systems. Diese Konstruktionsweise ist besonders zweckmäßig.

Vorteilhafterweise ist am oder nach dem Retentatausgang eine Druckregeleinrichtung vorgesehen.

Gemäß einer weiteren bevorzugten Ausführungsform weist die erste Membraneinheit mindestens einen weiteren, vom Gaseingang stromabwärtsliegenden Permeatausgang auf. Der stromabwärtsliegende Permeatausgang ist direkt oder indirekt mit dem Gaseingang der ersten Membraneinheit leitungsmäßig verbunden, sodass ein Gasstrom zumindest teilweise vom stromabwärtsliegenden Permeatausgang in den Gaseingang der ersten Membraneinheit rückgeführt werden kann.
Zweckmäßigerweise ist ein der ersten Membraneinheit nachgeschalteter, vorzugsweise drehzahlregelbarer Verdichter vorgesehen, wobei der Verdichter ansaugseitig mit dem stromabwärtsliegenden Permeatausgang verbunden ist und zum Abzug des Permeats über den stromabwärtsliegenden Permeatausgang eingerichtet ist.

Das Vorsehen des mit dem stromabwärtsliegenden Permeatausgang verbundenen und zum Abzug des im Gleichstrom gewonnenen Permeats eingerichteten Verdichters ermöglicht besonders flexible Einsatzmöglichkeiten und Ausgestaltungen. Der eigens dafür vorgesehen Verdichter erlaubt einen kontrollierten Abzug des im Gleichstrom gewonnenen Permeats über den stromabwärtsliegenden Permeatausgang, unabhängig vom Druck des Feedgases und insbesondere auch unabhängig davon, wie und zu welchem Teil das abgezogene Permeat in die erste Membraneinheit rückgeführt wird.

In der aus dem EP 3 180 104 B1 offenbarten Vorrichtung bzw. dem darin offenbarten Verfahren wird das im Gleichstrom gewonnene Permeat einem der Membraneinheit vorgeschalteten Verdichter zugeführt und druckbeaufschlagt der Membraneinheit wieder als Feedgas zugeführt. Der Abzug des im Gleichstrom gewonnenen Permeats über den stromabwärtsliegenden Permeatausgang wird daher wesentlich durch den der Membraneinheit vorgeschalteten Verdichter bestimmt. Eine höhere Druckbeaufschlagung durch den Verdichter bedingt einen stärkeren Austritt des im Gleichstrom gewonnenen Permeats. Dies erschwert allerdings Anpassungen bzw. Erweiterungen im Bereich der Rückführung vom stromabwärtsliegenden Permeatausgang zum Gaseingang der Membraneinheit. Soll beispielsweise nur ein Teil des Permeats rückgeführt werden, zusätzliche Gasströme (gegebenenfalls in regelbaren Verhältnissen) der Membraneinheit zugeführt werden, oder auch weitere Membraneinheiten dem stromabwärtsliegenden Permeatausgang und dem Gaseingang zwischengeschaltet werden, würde das die Stärke des Austritts des im Gleichstrom gewonnenen Permeats verändern und so den Trennungsvorgang in der Membraneinheit beeinflussen bzw. Anpassungen erforderlich machen.

Durch den optionalen Verdichter, welcher mit dem stromabwärtsliegenden Permeatausgang verbunden ist, werden derartige Probleme verringert. Falls das System mit dem Verdichter ausgestaltet ist, kann es im Bereich der Rückführung vom stromabwärtsliegenden Permeatausgang zum Gaseingang flexibel angepasst und erweitert werden, ohne dass der Abzug des im Gleichstrom gewonnenen Permeats beeinflusst wird. Beispielsweise kann das im Gleichstrom gewonnene Permeat direkt oder indirekt (z.B. über eine weitere Membraneinheit), zur Gänze oder nur zum Teil, oder auch nach Zusammenführen mit weiteren (frei regelbaren) Gasströmen rückgeführt werden, ohne dass der Trennungsvorgang innerhalb der Membraneinheit beeinflusst wird. Vereinfacht gesagt, macht der nachgeschaltete Verdichter die Membraneinheit unabhängiger davon, was vor dem Gaseingang passiert.

In einer weiteren bevorzugten Ausführungsform weist das System (bereits vor dem Nachrüsten) eine zweite Membraneinheit mit einem Gaseingang, einem Retentatausgang und einem Permeatausgang auf, wobei im Zuge des Nachrüstens der Permeatausgang der zweiten Membraneinheit mit dem Gaseingang der ersten Membraneinheit leitungsmäßig verbunden wird. Vorzugsweise ist der zweiten Membraneinheit ein zweiter, vorzugsweise drehzahlregelbarer Verdichter vorgeschaltet ist, wobei der zweite Verdichter mit dem Gaseingang der zweiten Membraneinheit leitungsmäßig verbunden ist, wobei der Verdichter auslassseitig mit der in den zweiten Verdichter führenden Gaszufuhr leitungsmäßig verbunden ist und wobei, im Zuge des Nachrüstens, der Retentatausgang der ersten Membraneinheit mit der in den zweiten Verdichter führenden Gaszufuhr leitungsmäßig verbunden wird. In einer entsprechenden bevorzugten Ausführungsform des erfindungsgemäßen Verfahrens zur Schwachgasverwertung werden das Retentat der ersten Membraneinheit und das im Gleichstrom gewonnen Permeat der ersten Membraneinheit druckbeaufschlagt und einer zweiten Membraneinheit als Feedgas zugeführt, wobei das Permeat der zweiten Membraneinheit der ersten Membraneinheit als Feedgas zugeführt wird und das Retentat der zweiten Membraneinheit über einen Retentatausgang der zweiten Membraneinheit abgezogen wird.

Es hat sich gezeigt, dass das Vorsehen der zweiten Membraneinheit zu einer besonders guten Recovery im Produktgas und zu einem besonders reinen Offgas führt. Wird beispielsweise ein hauptsächlich aus CH₄ und CO₂ bestehendes Gasgemisch mit dem System gemäß dieser Ausführungsform in CH₄ als Produktgas und CO₂ als Offgas getrennt, erfolgt eine erste Trennung von CH₄ und CO₂ bereits in der zweiten Membraneinheit. Das Permeat der zweiten Membraneinheit, welches der ersten Membraneinheit als Feedgas zugeführt wird, weist daher bereits eine reduzierte Konzentration von CH₄ auf. Das im Gegenstrom gewonnene Offgas der ersten Membraneinheit weist in diesem Fall eine besonders niedrige CH₄ Konzentration auf. Durch die Rückführung des Retentats und des im Gleichstrom gewonnenen Permeats der ersten Membraneinheit in die zweite Membraneinheit wird außerdem ein besonders hoher Anteil des im eingesetzten Gasgemisch vorhandenen CH₄ im als Produktgas abgezogenen Retentat der zweiten Membraneinheit erhalten.

In einer besonders bevorzugten Ausführungsform weist das System (bereits vor dem Nachrüsten) weiters eine dritte Membraneinheit mit einem Gaseingang, einem Retentatausgang und einem Permeatausgang auf, wobei der Gaseingang der dritten Membraneinheit mit dem Retentatausgang der zweiten Membraneinheit leitungsmäßig verbunden ist, und wobei der Permeatausgang der dritten Membraneinheit mit der in den zweiten Verdichter führenden Gaszufuhr leitungsmäßig verbunden ist. Dementsprechend wird in einer bevorzugten Ausführungsform des erfindungsgemäßen Verfahrens zur Schwachgasverwertung das Retentat der zweiten Membraneinheit einer dritten Membraneinheit als Feedgas zugeführt, wobei das Permeat der dritten Membraneinheit druckbeaufschlagt und der zweiten Membraneinheit als Feedgas zugeführt wird und das Retentat der dritten Membraneinheit über einen Retentatausgang der dritten Membraneinheit abgezogen wird.

Diese Ausführungsform hat den Vorteil, dass eine noch bessere Auftrennung des Gasgemisches ermöglicht wird. Dies wird unter anderem dadurch erreicht, dass das Retentat der zweiten Membraneinheit in der dritten Membraneinheit noch einmal aufgetrennt wird und das Permeat der zweiten Membraneinheit der zweiten Membraneinheit wieder als Feedgas zugeführt wird. CO₂, welches noch im Retentat der zweiten Membraneinheit enthalten sein könnte, kann somit über das Permeat der dritten Membraneinheit und in der Folge über das Permeat der zweiten Membraneinheit in die erste Membraneinheit gelangen, worin es über das im Gegenstrom gewonnene Permeat ins Offgas gelangen kann.

Vorzugsweise ist am oder nach dem Retentatausgang der dritten Membraneinheit eine weitere Druckregeleinrichtung vorgesehen. Im diesem Zusammenhang ist es bevorzugt, dass das Retentat der dritten Membraneinheit über eine am oder nach dem Retentatausgang der dritten Membraneinheit vorgesehene weitere Druckregeleinrichtung abgezogen wird. Dies ermöglicht es, den Druck bzw. den Widerstand innerhalb der dritten Membraneinheit noch genauer zu steuern.

Im Zusammenhang mit der Erfindung wird vorzugsweise ein hauptsächlich aus CH₄/CO₂ bestehendes Schwachgas mit einer Methankonzentration nicht über 30 Vol.-% verwertet (wobei "hauptsächlich" für den Zweck der vorliegenden Erfindung einen Anteil im Gasgemisch von mehr als 50 Vol.-%, vorzugsweise mehr als 55 Vol.-%, 60 Vol.-%, 65 Vol.-%, 70 Vol.-%, 75 Vol.-%, 80 Vol.-%, 85 Vol.-%, insbesondere bevorzugt mehr als 90 Vol.-% bzw. 95 Vol.-%, bedeutet).

Möglichkeiten für die Ausgestaltung und Steuerung der ersten Membraneinheit sind beispielsweise in der EP 3 180 104 B1 offenbart. Durch die Kombination von Druckregeleinrichtung und bestimmtem Gasgemisch, welche einerseits die Methankonzentration im Feedgas beschränkt und gleichzeitig durch die Druckregeleinrichtung für das Retentat einen Widerstand im Retentatraum vorsieht und beispielsweise durch ein Ventil oder Stellventil, die Ansaugseite eines vorzugsweise drehzahlregelbaren Verdichters oder (ebenfalls vorzugsweise drehzahlregelbaren) Kompressors oder eine Zuleitung in eine Stufe eines vorzugsweise drehzahlregelbaren mehrstufigen Verdichters oder Kompressors dargestellt sein kann, ist es möglich, die Druckregeleinrichtung den Vorgaben entsprechend mehr oder weniger zu schließen bzw. einen Widerstand durch die Drehzahl des Verdichters oder Kompressors zu geben oder durch Regelung bzw. Steuerung der Drehzahl des Verdichters oder Kompressors einzustellen. Ein Schließen des Regelventil ist dabei nicht notwendigerweise mit einer Druckerhöhung im Retentatraum verbunden, so kann beispielsweise zusammen mit der Schließung des Regelventils eine Verringerung des Druckes des in die erste Membraneinheit geleiteten Feedgases einhergehen, wodurch der Druck im Retentatraum letztendlich gleich bleibt und nicht erhöht wird. Wichtig ist in gewissen Ausführungsformen nur, dass in der ersten Membraneinheit retentatseitig ein Widerstand für das dort vorhandene Gasgemisch vorgesehen werden kann. Dadurch kann die erste Membraneinheit in Ausführungsformen im Bereich des zweiten, vom Gaseingang stromabwärts gelegenen Permeatausgang zumindest teilweise kontrolliert im Gleichstrom betrieben werden, während die erste Membraneinheit im Bereich des ersten Permeatausgangs, wie üblich, vorwiegend im Gegenstrom betrieben wird. "Zumindest teilweise" bzw. "vorwiegend" bedeuten dabei nicht, dass an beiden Permeatausgängen zugleich Gleichstrom und Gegenstrom herrscht (was technisch unmöglich ist), sondern dass das am jeweiligen Permeatausgang austretende Permeat aus einem Bereich der Membran stammt, welcher, je nach dem gewählten Bedingungen, eben permeatseitig entweder in Gleich- oder im Gegenstrom zur retentatseitigen Strömungsrichtung betrieben wurde. Gegenüber einem einzigen im Gegenstrom betriebenen Permeatausgang führt dies zu wesentlichen Verbesserungen beim Betrieb des Systems, hauptsächlich hinsichtlich einer Verringerung der Konzentration an Produktgas im Offgas aber auch hinsichtlich einer Erhöhung der Menge an Produktgas. So kann bei der Trennung eines hauptsächlich aus CH₄/CO₂ bestehenden Schwachgases, in CH₄ als Produktgas und hauptsächlich CO₂ als Offgas eine hohe Recovery an CH₄ im Produktgas erreicht werden. Durch die in bevorzugten Ausführungsformen vorgesehene zweite und/oder dritte Membraneinheit kann die Recovery sogar noch weiter gesteigert werden. Vorzugsweise beträgt die Recovery von CH₄ im Produktgas mehr als 98%, bevorzugt mehr als 99%, insbesondere mehr als 99,5%.

Selbstverständlich kann in einer bevorzugten Ausführungsform, beispielsweise bei Vorsehen von Sensoren an geeigneter Stelle im System, die Druckregeleinrichtung auch automatisiert betrieben werden, indem die Druckregeleinrichtung mittels einer Steuereinrichtung zur Einhaltung eines vorgegebenen, an einem oder mehreren Stellen innerhalb oder außerhalb des Systems gemessenen Grenzwertes geöffnet bzw. geschlossen wird. Der Grenzwert kann beispielsweise die Methankonzentration im Offgas sein, wobei in dem Fall der Sensor ein an oder nahe beim ersten Permeatausgang der ersten Membraneinheit vorgesehener Gassensor sein kann. Beispielsweise ist für die Freisetzung von Methan (Produktgas bzw. Retentat bei der Trennung von Biogas mittels Gaspermeation) in Deutschland die maximal emittierbare Methanmenge im Abgas auf 0,2 Vol.-% der im Biogasprozess produzierten Methanmasse begrenzt, wobei das Einhalten dieses Grenzwerts beispielsweise durch das erfindungsgemäße System bei Vorsehen einer Steuereinrichtung auch automatisiert vorgesehen werden kann. Dadurch, dass der stromabwärtsliegende Permeatausgang der ersten Membraneinheit in der Ausführungsform direkt oder indirekt mit dem Gaseingang der ersten Membraneinheit leitungsmäßig verbunden ist, wird vorgesehen, dass das Permeat der ersten Membraneinheit zumindest teilweise vom stromabwärtsliegenden Permeatausgang in die erste Membraneinheit rückgeführt werden kann.

Das über den ersten Permeatausgang der ersten Membraneinheit ausgeleitete Offgas (CO₂) wird (ohne weitere Reinigung bezüglich des enthaltenen Methans) direkt in die Umwelt emittiert.

Gemäß einer bevorzugten Ausführungsform ist vorgesehen, dass am oder nach dem ersten Permeatausgang ein vorzugsweise drehzahlregelbarer Verdichter und/oder eine Druckregeleinrichtung vorgesehen ist bzw. sind. Durch das Vorsehen einer Druckregeleinrichtung, beispielsweise eines Ventils oder Stellventils, kann bei Verringerung des Durchflusses durch das Ventil im Permeatraum der ersten Membraneinheit ein Rückstau erzeugt werden, wodurch sich die im Gleichstrom betriebene Fläche der Trennmembran vergrößert. Wird andererseits am oder nach dem ersten Permeatausgang ein vorzugsweise drehzahlregelbarer Verdichter betrieben, erhöht sich der Abzug von Offgas aus dem ersten Permeatausgang und die im Gleichstrom betriebene Fläche der Trennmembran verringert sich. Beim Vorsehen von sowohl Druckregeleinrichtung als auch vorzugsweise drehzahlregelbaren Verdichter kann das System somit in jede Richtung gesteuert werden.

Es ist zweckmäßig, wenn der der ersten Membraneinheit nachgeschaltete Verdichter und/oder die am oder nach dem Retentatausgang vorgesehene Druckregeleinrichtung mit einer Steuereinrichtung verbunden sind. Bei Vorsehen von beispielsweise einem Gassensor im Bereich des ersten Permeatausgangs, welcher Gassensor beispielsweise die Konzentration an Produktgas (z.B. CH₄) im Offgas direkt oder indirekt messen kann, ist es wie bereits zuvor erwähnt möglich, das System derart zu betreiben, dass ein vorgegebener Produktgasanteil im Offgas nicht überschritten wird.

In einer weiteren bevorzugten Ausführungsform ist bzw. sind der am oder nach dem ersten Permeatausgang vorgesehene Verdichter und/oder die am oder nach dem ersten Permeatausgang vorgesehene Druckregeleinrichtung mit einer bzw. der Steuereinrichtung verbunden. Bei Vorsehen von beispielsweise einem Gassensor im Bereich des ersten Permeatausgangs, welcher Gassensor beispielsweise die Konzentration an Produktgas im Offgas direkt oder indirekt messen kann, ist es wie bereits zuvor erwähnt möglich, das System derart zu betreiben, dass ein vorgegebener Produktgasanteil im Offgas nicht überschritten wird.
Es hat sich im Zuge der vorliegenden Erfindung herausgestellt, dass sogar mit ölgeschmierten Verdichtern die erforderliche Reinheit des Offgases erreicht werden kann. Daher weist das System in einer bevorzugten Ausführungsform zumindest einen ölgeschmierten Verdichter auf, vorzugsweise wobei zumindest der der ersten Membraneinheit nachgeschaltete Verdichter, falls vorhanden, und/oder der der zweiten Membraneinheit vorgeschaltete zweite Verdichter, falls vorhanden, und/oder der der ersten Membraneinheit vorgeschaltete, dritte Verdichter, falls vorhanden, ölgeschmiert sind.

Sämtliche Prozent-Angaben (%) hierin beziehen sich, wenn nicht anders gekennzeichnet, auf Volumenprozent. Unter einem "Anteil im Gasgemisch von mehr als x Vol.-% CH₄/CO₂" wird hierin verstanden, dass der die Summe der Anteile von CH₄ und CO₂ im Gasgemisch mehr als x Vol.-% beträgt.

Die vorliegende Erfindung betrifft des Weiteren die folgenden Ausführungsformen:
Ausführungsform 1. Verfahren zum Nachrüsten eines Systems zur Schwachgasverwertung, das eine thermische Nachbehandlungseinheit aufweist, wobei das System zur Schwachgasverwertung dazu eingerichtet ist, das durch diese Nachbehandlungseinheit thermisch nachbehandelte Schwachgas direkt in die Umwelt zu leiten, umfassend den folgenden Schritt:
   Ersetzen der thermischen Nachbehandlungseinheit durch eine erste Membraneinheit zur Nachbehandlung des Schwachgases, so dass das auf diese Weise nachgerüstete System dazu eingerichtet ist, zumindest einen Teil des Permeats der ersten Membraneinheit direkt in die Umwelt zu leiten.
Ausführungsform 2. Verfahren nach Ausführungsform 1, wobei die erste Membraneinheit einen Gaseingang für das durch die erste Membraneinheit nachzubehandelnde Schwachgas, welches durch die Nachbehandlung in Produktgas und Offgas aufgetrennt wird, einen Retentatausgang für das Produktgas, wobei der Retentatausgang vorzugsweise im Zuge des Nachrüstens mit dem System verbunden wird, und einen ersten Permeatausgang zur Ableitung von Offgas in die Umwelt aufweist, wobei im Zuge des Nachrüstens der Gaseingang mit dem System zur Schwachgasverwertung leitungsmäßig verbunden wird.
Ausführungsform 3. Verfahren nach Ausführungsform 2, wobei die erste Membraneinheit mindestens einen weiteren, vom Gaseingang stromabwärtsliegenden Permeatausgang aufweist und der stromabwärtsliegende Permeatausgang direkt oder indirekt mit dem Gaseingang der ersten Membraneinheit leitungsmäßig verbunden ist, sodass ein Gasstrom zumindest teilweise vom stromabwärtsliegenden Permeatausgang in den Gaseingang der ersten Membraneinheit rückgeführt werden kann.
Ausführungsform 4. Verfahren nach einer der Ausführungsformen 2 oder 3, wobei am oder nach dem Retentatausgang eine Druckregeleinrichtung vorgesehen ist.
Ausführungsform 5. Verfahren nach einer der Ausführungsformen 2 bis 4, wobei ein der ersten Membraneinheit nachgeschalteter, vorzugsweise drehzahlregelbarer Verdichter vorgesehen ist, wobei der Verdichter ansaugseitig mit dem stromabwärtsliegenden Permeatausgang verbunden ist und zum Abzug des Permeats über den stromabwärtsliegenden Permeatausgang eingerichtet ist.
Ausführungsform 6. Verfahren nach einer der Ausführungsformen 2 bis 5, wobei das System bereits vor dem Nachrüsten eine zweite Membraneinheit mit einem Gaseingang, einem Retentatausgang und einem Permeatausgang aufweist, wobei im Zuge des Nachrüstens der Permeatausgang der zweiten Membraneinheit mit dem Gaseingang der ersten Membraneinheit leitungsmäßig verbunden wird.
Ausführungsform 7. Verfahren nach Ausführungsform 6, wobei der zweiten Membraneinheit ein zweiter, vorzugsweise drehzahlregelbarer Verdichter vorgeschaltet ist, wobei der zweite Verdichter mit dem Gaseingang der zweiten Membraneinheit leitungsmäßig verbunden ist, wobei der Verdichter auslassseitig mit der in den zweiten Verdichter führenden Gaszufuhr leitungsmäßig verbunden ist und wobei im Zuge des Nachrüstens der Retentatausgang der ersten Membraneinheit mit der in den zweiten Verdichter führenden Gaszufuhr leitungsmäßig verbunden wird.
Ausführungsform 8. Verfahren nach Ausführungsform 6 oder 7, wobei das System bereits vor dem Nachrüsten eine dritte Membraneinheit mit einem Gaseingang, einem Retentatausgang und einem Permeatausgang aufweist, wobei
   der Gaseingang der dritten Membraneinheit mit dem Retentatausgang der zweiten Membraneinheit leitungsmäßig verbunden ist, und wobei der Permeatausgang der dritten Membraneinheit mit der in den zweiten Verdichter führenden Gaszufuhr leitungsmäßig verbunden ist.
Ausführungsform 9. Verfahren nach Ausführungsform 8, wobei am oder nach dem Retentatausgang der dritten Membraneinheit eine weitere Druckregeleinrichtung vorgesehen ist.
Ausführungsform 10. Verfahren nach einer der Ausführungsformen 2 bis 9, wobei nach dem Nachrüsten der ersten Membraneinheit ein dritter, vorzugsweise drehzahlregelbarer Verdichter vorgeschaltet ist, wobei der dritte Verdichter auslassseitig mit dem Gaseingang der ersten Membraneinheit verbunden ist.
Ausführungsform 11. Verfahren nach einer der Ausführungsformen 1 bis 10, wobei das System zumindest einen ölgeschmierten Verdichter aufweist, vorzugsweise wobei zumindest der der ersten Membraneinheit nachgeschaltete Verdichter, falls vorhanden, und/oder der der zweiten Membraneinheit vorgeschaltete zweite Verdichter, falls vorhanden, und/oder der der ersten Membraneinheit vorgeschaltete, dritte Verdichter, falls vorhanden, ölgeschmiert sind.
Ausführungsform 12. System zur Schwachgasverwertung, aufweisend eine erste Membraneinheit zur Nachbehandlung des Schwachgases, wobei das System dazu eingerichtet ist, zumindest einen Teil des Permeats der ersten Membraneinheit direkt in die Umwelt zu leiten.
Ausführungsform 13. System nach Ausführungsform 12, wobei die erste Membraneinheit einen Gaseingang für das durch die erste Membraneinheit nachzubehandelnde Schwachgas, welches durch die Nachbehandlung in Produktgas und Offgas aufgetrennt wird, einen Retentatausgang für das Produktgas und einen ersten Permeatausgang zur Ableitung von Offgas in die Umwelt aufweist.
Ausführungsform 14. System nach Ausführungsform 13, wobei die erste Membraneinheit mindestens einen weiteren, vom Gaseingang stromabwärtsliegenden Permeatausgang aufweist und der stromabwärtsliegende Permeatausgang direkt oder indirekt mit dem Gaseingang der ersten Membraneinheit leitungsmäßig verbunden ist, sodass ein Gasstrom zumindest teilweise vom stromabwärtsliegenden Permeatausgang in den Gaseingang der ersten Membraneinheit rückgeführt werden kann.
Ausführungsform 15. System nach Ausführungsform 13 oder 14, wobei am oder nach dem Retentatausgang eine Druckregeleinrichtung vorgesehen ist.
Ausführungsform 16. System nach einer der Ausführungsformen 13 bis 15, wobei ein der ersten Membraneinheit nachgeschalteter, vorzugsweise drehzahlregelbarer Verdichter vorgesehen ist, wobei der Verdichter ansaugseitig mit dem stromabwärtsliegenden Permeatausgang verbunden ist und zum Abzug des Permeats über den stromabwärtsliegenden Permeatausgang eingerichtet ist.
Ausführungsform 17. System nach einer der Ausführungsformen 13 bis 16, wobei das System eine zweite Membraneinheit mit einem Gaseingang, einem Retentatausgang und einem Permeatausgang aufweist, wobei der Permeatausgang der zweiten Membraneinheit mit dem Gaseingang der ersten Membraneinheit leitungsmäßig verbunden ist.
Ausführungsform 18. System nach einer der Ausführungsformen 13 bis 17, wobei der zweiten Membraneinheit ein zweiter, vorzugsweise drehzahlregelbarer Verdichter vorgeschaltet ist, wobei der zweite Verdichter mit dem Gaseingang der zweiten Membraneinheit leitungsmäßig verbunden ist, wobei der Verdichter auslassseitig mit der in den zweiten Verdichter führenden Gaszufuhr leitungsmäßig verbunden ist und wobei der Retentatausgang der ersten Membraneinheit mit der in den zweiten Verdichter führenden Gaszufuhr leitungsmäßig verbunden ist.
Ausführungsform 19. System nach einer der Ausführungsformen 13 bis 18, wobei das System eine dritte Membraneinheit mit einem Gaseingang, einem Retentatausgang und einem Permeatausgang aufweist, wobei
   der Gaseingang der dritten Membraneinheit mit dem Retentatausgang der zweiten Membraneinheit leitungsmäßig verbunden ist, und wobei der Permeatausgang der dritten Membraneinheit mit der in den zweiten Verdichter führenden Gaszufuhr leitungsmäßig verbunden ist.
Ausführungsform 20. System nach einer der Ausführungsformen 13 bis 19, wobei am oder nach dem Retentatausgang der dritten Membraneinheit eine weitere Druckregeleinrichtung vorgesehen ist.
Ausführungsform 21. System nach einer der Ausführungsformen 13 bis 20, wobei der ersten Membraneinheit ein dritter, vorzugsweise drehzahlregelbarer Verdichter vorgeschaltet ist, wobei der dritte Verdichter auslassseitig mit dem Gaseingang der ersten Membraneinheit verbunden ist.
Ausführungsform 22. System nach einer der Ausführungsformen 12 bis 21, wobei das System zumindest einen ölgeschmierten Verdichter aufweist, vorzugsweise wobei zumindest der der ersten Membraneinheit nachgeschaltete Verdichter, falls vorhanden, und/oder der der zweiten Membraneinheit vorgeschaltete zweite Verdichter, falls vorhanden, und/oder der der ersten Membraneinheit vorgeschaltete, dritte Verdichter, falls vorhanden, ölgeschmiert sind.
Ausführungsform 23. Verwendung des Systems nach einer der Ausführungsformen 12 bis 22 zur Trennung von Schwachgas mit einem Anteil von mehr als 50 Vol.-%, vorzugsweise mehr als 55 Vol.-%, 60 Vol.- %, 65 Vol.-%, 70 Vol.-%, 75 Vol.-%, 80 Vol.-%, 85 Vol.-%, insbesondere bevorzugt mehr als 90 Vol.-% bzw. 95 Vol.-% CH₄/CO₂ und mit einer Methankonzentration nicht über 30 Vol.-% in CH₄-do-miniertes Produktgas und CO₂-dominiertes Offgas, wobei das Offgas aus der ersten Membraneinheit in die Umwelt geleitet wird.
Ausführungsform 24. Verfahren zur Auftrennung von Schwachgas mit einem Anteil von mehr als 50 Vol.- %, vorzugsweise mehr als 55 Vol.-%, 60 Vol.-%, 65 Vol.-%, 70 Vol.-%, 75 Vol.-%, 80 Vol.-%, 85 Vol.-%, insbesondere bevorzugt mehr als 90 Vol.-% bzw. 95 Vol.-% CH₄/CO₂ und mit einer Methankonzentration nicht über 30 Vol.-% in Produktgas und Offgas mittels Gaspermeation durch das System nach einer der Ausführungsformen 12 bis 22, wobei das Permeat der ersten Membraneinheit teilweise im Gleichstrom und teilweise im Gegenstrom gewonnen wird und das im Gegenstrom gewonnene Permeat als Offgas in die Umwelt geleitet wird.
Ausführungsform 25. Verfahren nach Ausführungsform 24, wobei das Retentat der ersten Membraneinheit über einen Retentatausgang der ersten Membraneinheit und eine dort vorgesehene Druckregeleinrichtung abgezogen wird, wobei der Abzug des im Gleichstrom gewonnenen Permeats in Abhängigkeit von der Konzentration von CH₄ im Offgas gesteuert bzw. geregelt wird.
Ausführungsform 26. Verfahren nach Ausführungsform 25, wobei das im Gleichstrom gewonnene Permeat durch einen der ersten Membraneinheit nachgeschalteten, vorzugsweise drehzahlregelbaren Verdichter abgezogen wird.
Ausführungsform 27. Verfahren nach Ausführungsform 25 oder 26, wobei das Retentat der ersten Membraneinheit und das im Gleichstrom gewonnen Permeat der ersten Membraneinheit druckbeaufschlagt und der zweiten Membraneinheit als Feedgas zugeführt werden, wobei das Permeat der zweiten Membraneinheit der ersten Membraneinheit als Feedgas zugeführt wird und das Retentat der zweiten Membraneinheit über einen Retentatausgang der zweiten Membraneinheit abgezogen wird.
Ausführungsform 28. Verfahren nach einer der Ausführungsformen 25 bis 27, wobei das Retentat der zweiten Membraneinheit der dritten Membraneinheit als Feedgas zugeführt wird, wobei das Permeat der dritten Membraneinheit druckbeaufschlagt und der zweiten Membraneinheit als Feedgas zugeführt wird und das Retentat der dritten Membraneinheit über einen Retentatausgang der dritten Membraneinheit abgezogen wird.
Ausführungsform 29. Verfahren nach einer der Ausführungsformen 25 bis 28, wobei das Retentat der dritten Membraneinheit über eine am oder nach dem Retentatausgang der dritten Membraneinheit vorgesehene weitere Druckregeleinrichtung abgezogen wird.

Die vorliegende Erfindung wird nun unter Bezugnahme auf die beiliegenden Figuren näher erklärt, ist jedoch nicht auf diese eingeschränkt.
Fig. 1 zeigt ein Blockschaltbild eines Systems zur Schwachgasverwertung aus dem Stand der Technik.
Fig. 2 zeigt ein Blockschaltbild eines Systems zur Schwachgasverwertung, das auf der erfindungsgemäßen Nachrüstung des Systems von Fig. 1 basiert (Ersetzen der thermischen Nachbehandlungseinheit T durch die erste Membraneinheit 1 zur Nachbehandlung des Schwachgases).

Die Figuren 3 bis 5 zeigen Blockschaltbilder bevorzugter Konfigurationen um die erste Membraneinheit 1 zur Nachbehandlung des Schwachgases innerhalb des erfindungsgemäßen Systems zur Schwachgasverwertung.

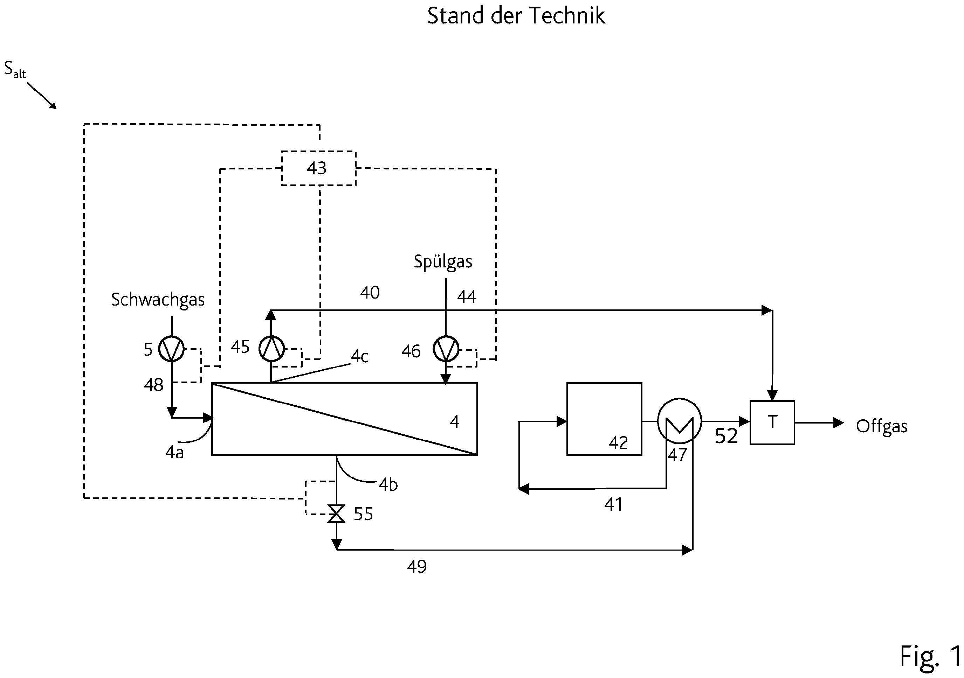

Wie sich im Detail aus Fig. 1 entnehmen lässt, ist darin ein System Sₐₗₜ zur Schwachgasverwertung vor dem Nachrüsten, wie es im Wesentlichen in der EP 2 762 220 A1 offenbart ist, gezeigt. Das System Sₐₗₜ weist eine zweite Membraneinheit 4 mit einem Gaseingang 4a, einem Retentatausgang 4b und einem Permeatausgang 4c auf. Darüber hinaus weist das System eine Gaseingangsleitung 48 zur Zuführung des Schwachgases samt darin angeordnetem Verdichter 5, einer Retentatausgangsleitung 49 mit einem darin angeordnetem Stellventil 55, einer Permeatausgangsleitung 40 samt darin angeordnetem Verdichter 45 und einer Spülgaseingangsleitung 44 samt darin angeordnetem Verdichter 46 auf. Die Retentatausgangsleitung 49 ist mit einem direkt oder indirekt im Abgasstrom einer Verwertungseinheit 42 angeordneten Wärmetauscher 47 verbunden, vorgewärmtes Retentat wird dann vom Wärmetauscher 47 über die Leitung 41 der Verwertungseinheit 42, beispielsweise einem Gasmotor oder einem Brenner, zugeführt, wobei das heiße Abgas der Verwertungseinheit über den Wärmetauscher 47 und die Leitung 52 in eine thermische Nachbehandlungseinheit T (Nachbrenner) geleitet wird. Das Offgas (Abgas) der thermischen Nachbehandlungseinheit T wird direkt in die Umwelt geleitet, da die darin verbleibende Methankonzentration niedrig genug ist, um die Umweltauflagen zu erfüllen. Die Permeatausgangsleitung 40 ist ebenfalls mit der thermischen Nachbehandlungseinheit T verbunden, in welcher es zusammen mit dem (durch den Wärmetauscher 47 leicht abgekühlten) Abgasstrom der Verwertungseinheit 42 zur nachhaltigen Entfernung von noch vorhandenem Methan nachoxidiert bzw. verbrannt wird. In der Gaseingangsleitung 48, in der Spülgaseingangsleitung 44, in der Permeatausgangsleitung 40 und in der Retentatausgangsleitung 49 sind jeweils Gassensoren vorgesehen, welche mit der Stelleinrichtung 43 zur leistungsmäßigen Steuerung bzw. Regelung der Verdichter oder Kompressoren 5, 45 und 46 bzw. zum Öffnen und Schließen des Stellventils 55 verbunden sind.

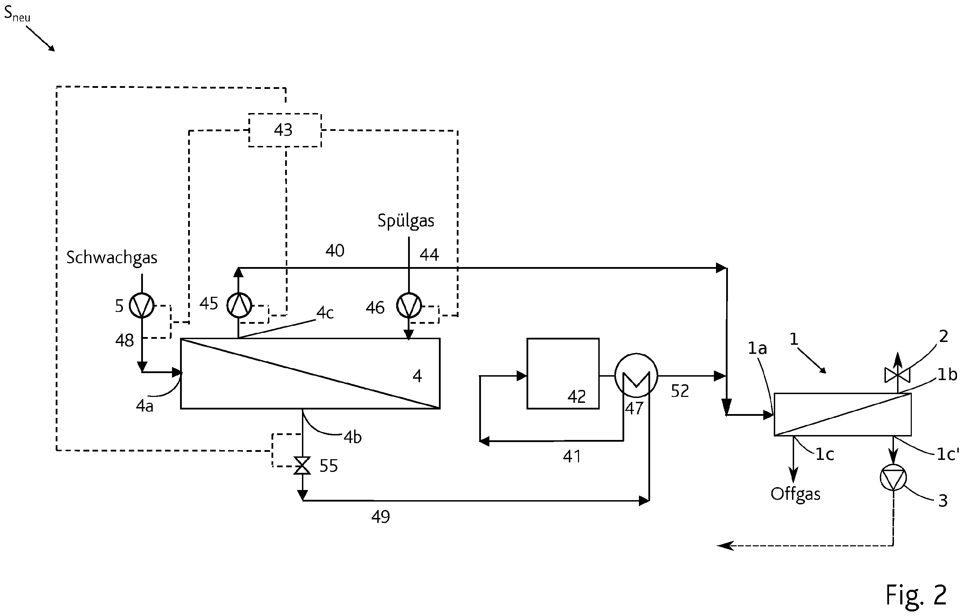

Das System Sₐₗₜ von Fig. 1 wird nachgerüstet, indem die thermischen Nachbehandlungseinheit T durch eine erste Membraneinheit 1 zur Nachbehandlung des Schwachgases ersetzt wird und der Gaseingang 1a dieser Membraneinheit 1 mit dem System Sₐₗₜ leitungsmäßig verbunden wird, wodurch eine Ausführungsform des erfindungsgemäßen Systems Sₙₑᵤ entsteht (siehe Fig. 2). Dieses System Sₙₑᵤ ist dazu eingerichtet, das Permeat der ersten Membraneinheit 1 über den ersten Permeatausgang 1c als Offgas direkt in die Umwelt zu leiten (da die darin verbleibende Methankonzentration überraschenderweise niedrig genug ist, um die immer strenger werdenden Umweltauflagen zu erfüllen).

Überdies weist die erste Membraneinheit 1 gemäß Fig. 2 einen Retentatausgang 1b und einen weiteren, vom Gaseingang 1a stromabwärtsliegenden Permeatausgang 1c' auf. Wie oben erwähnt, wird in der Membraneinheit 1 im Gegenstrombereich anfallendes Offgas über der Permeatausgang 1c in die Umwelt abgeführt. Im Gleichstrombereich über Permeatausgang 1c' und mittels des Verdichters 3 abgesaugtes Permeat kann innerhalb des Systems Sₙₑᵤ weiterverwendet werden (in Fig. 2 als strichlierte Linien angedeutet). Dadurch kann über Gaseingang 1a, Permeatausgang 1c' und Verdichter 3 in der Membraneinheit 1 im Gleichstrombereich abgetrenntes Permeat zumindest teilweise im Kreislauf geführt werden. Produktgas wird über den Retentatausgang 1b abgeführt (und beispielsweise direkt oder indirekt zur Verwertungseinheit 42 rückgeführt - nicht in Fig. 2 gezeigt), wobei die dort vorgesehene Druckregeleinrichtung 2 dazu dient, den Druck im Retentatraum der Membraneinheit 1 zu erhöhen, wodurch der Betrieb der Trennmembran im teilweisen Gleichstrom kontrollierbar wird.

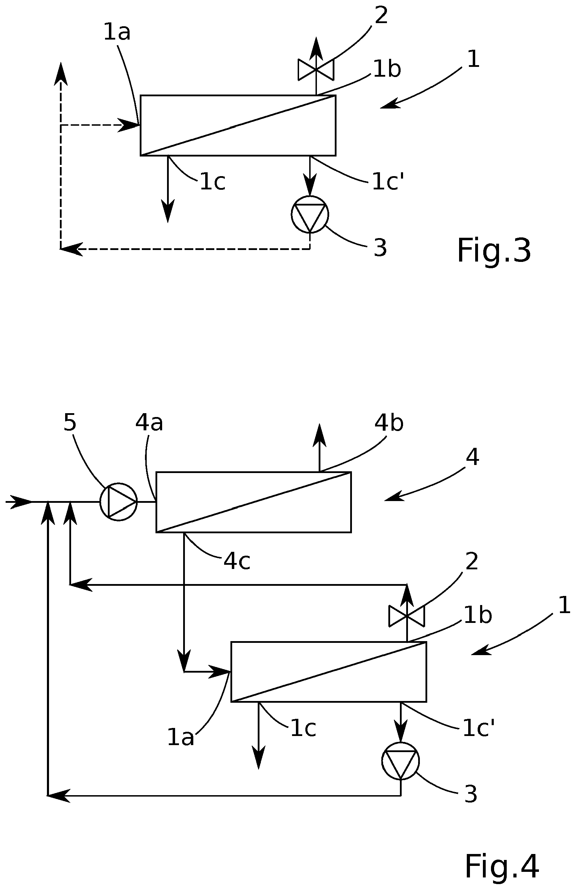

Eine bevorzugte Konfiguration der Membraneinheit 1 in einem System zur Schwachgasverwertung ist in Fig. 3 gezeigt. Demgemäß ist die erste Membraneinheit 1 mit einem Gaseingang 1a, einem Retentatausgang 1b, einem ersten Permeatausgang 1c und einem weiteren, vom Gaseingang 1a stromabwärtsliegenden Permeatausgang 1c' ausgestattet. In der Membraneinheit 1 wird im Gegenstrombereich anfallendes Offgas über der Permeatausgang 1c direkt in die Umwelt abgeführt. Im Gleichstrombereich über Permeatausgang 1c' und mittels des Verdichters 3 abgesaugtes Permeat wird direkt oder indirekt der ersten Membraneinheit 1 wieder als Feedgas zugeführt (in Fig. 3 als strichlierte Linien angedeutet). Dadurch wird über Gaseingang 1a, Permeatausgang 1c' und Verdichter 3 in der Membraneinheit 1 im Gleichstrombereich abgetrenntes Permeat zumindest teilweise im Kreislauf geführt. Produktgas wird über den Retentatausgang 1b abgeführt, wobei die dort vorgesehene Druckregeleinrichtung 2 dazu dient, den Druck im Retentatraum der Membraneinheit 1 zu erhöhen, wodurch der erfindungsgemäße Betrieb der Trennmembran im teilweisen Gleichstrom kontrollierbar wird.

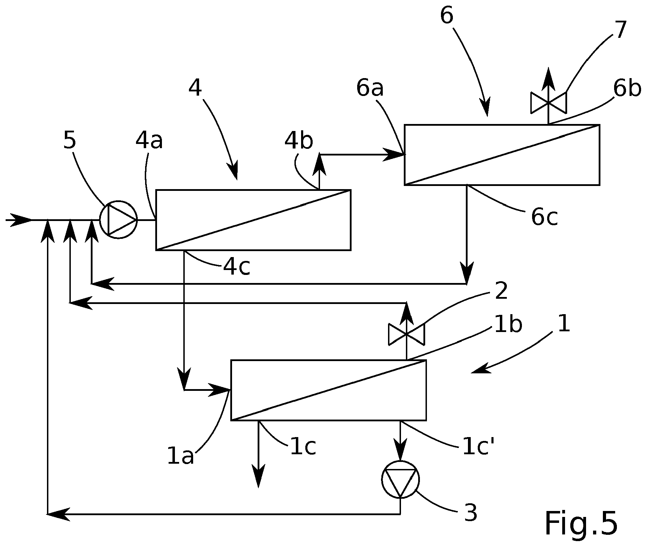

Dadurch, dass gemäß Fig. 3 ein dem stromabwärtsliegenden Permeatausgang 1c' nachgeschalteten Verdichter 3 vorgesehen ist, kann der Abzug des im Gleichstrom gewonnenen Permeats über den stromabwärtsliegenden Permeatausgang (1c') unabhängig vom Druck des Feedgases und auch unabhängig davon, wie und zu welchem Teil das abgezogene Permeat in die erste Membraneinheit rückgeführt wird, erfolgen. Das System kann so im Bereich der Rückführung vom stromabwärtsliegenden Permeatausgang zum Gaseingang der ersten Membraneinheit flexibel angepasst und erweitert werden, wie in den bevorzugten Ausführungsformen gemäß Fig. 4 und 5 gezeigt.

Hinsichtlich Fig. 3 gilt unabhängig davon, wo genau die Permeatausgänge zueinander platziert sind (abgesehen davon, dass der stromabwärtsliegende Permeatausgang 1c' in dieser Ausführungsform stromabwärts vom Gaseingang 1a sein muss) Folgendes:
Bezüglich dem ersten Permeatausgang 1c wird ein vom linken Bereich (vom Ausgang 1c aus gesehen) des Permeatraums stammendes Permeat im Gleichstrom gewonnen, da die Strömungsrichtung des Retentats von Gaseingang 1a zum Retentatausgang 1b gleich ist mit der Strömungsrichtung vom linken Bereich des Permeatraums zum ersten Permeatausgang 1c. Andererseits wird ein vom rechten Bereich (vom Ausgang 1c aus gesehen) des Permeatraums stammendes Permeat im Gegenstrom gewonnen, da die Strömungsrichtung des Retentats von Gaseingang 1a zum Retentatausgang 1b entgegengesetzt ist zur Strömungsrichtung vom rechten Bereich des Permeatraums zum ersten Permeatausgang 1c.

Ähnliches gilt in der Ausführungsform gemäß Fig. 3 bezüglich dem stromabwärtsliegenden Permeatausgang 1c': Dort wird ein vom linken Bereich (vom Ausgang 1c' aus gesehen) des Permeatraums stammendes Permeat ebenfalls im Gleichstrom gewonnen, da die Strömungsrichtung des Retentats von Gaseingang 1a zum Retentatausgang 1b gleich ist mit der Strömungsrichtung vom linken Bereich des Permeatraums zum stromabwärtsliegenden Permeatausgang 1c'. Andererseits wird ein vom rechten Bereich (vom stromabwärtsliegenden Permeatausgang 1c' aus gesehen) des Permeatraums stammendes Permeat im Gegenstrom gewonnenen, da die Strömungsrichtung des Retentats von Gaseingang 1a zum Retentatausgang 1b entgegengesetzt ist zur Strömungsrichtung vom rechten Bereich des Permeatraums zum stromabwärtsliegenden Permeatausgang 1c'.

Es versteht sich hinsichtlich der Ausführungsform von Fig. 3 von selbst, dass an keinem Permeatausgang ein Permeat vorhanden sein kann, welches von Bereichen der Membran stammt, welche ausschließlich in Gleich- bzw. ausschließlich im Gegenstrom betrieben wurden. Im Rahmen dieser Ausführungsform stammt beim stromabwärtsliegenden Permeatausgang 1c' abgesaugtes Permeat aber vorzugsweise mehrheitlich (d.h. mehr als die Hälfte) von Bereichen der Membran, welche im Gleichstrom betrieben wurden. Ebenso stammt beim ersten Permeatausgang 1c erhaltenes Permeat vorzugsweise mehrheitlich (d.h. mehr als die Hälfte) von Bereichen der Membran, welche im Gegenstrom betrieben wurden.

In der Fig. 4 gezeigten Ausführungsform weist das System zur Schwachgasverwertung eine zweite Membraneinheit 4 mit einem Gaseingang 4a, einem Retentatausgang 4b und einem Permeatausgang 4c auf. Der Permeatausgang 4c der zweiten Membraneinheit 4 ist mit dem Gaseingang 1a der ersten Membraneinheit 1 leitungsmäßig verbunden, sodass das Permeat der zweiten Membraneinheit 4 der ersten Membraneinheit 1 als Feedgas zugeführt werden kann. In der gezeigten Ausführungsform ist der Verdichter 3 auslassseitig mit der in einen zweiten, der zweiten Membraneinheit 4 vorgeschalteten Verdichter 5 führenden Gaszufuhr leitungsmäßig verbunden, sodass das im Gleichstrom gewonnen Permeat der ersten Membraneinheit 1 druckbeaufschlagt und der zweiten Membraneinheit 4 als Feedgas zugeführt werden kann. Darüber hinaus ist auch der Retentatausgang 1b der ersten Membraneinheit 1 mit der in den zweiten Verdichter 5 führenden Gaszufuhr leitungsmäßig verbunden, sodass auch das Retentat der ersten Membraneinheit 1 der zweiten Membraneinheit 4 als Feedgas zugeführt werden kann. Durch die Membraneinheit 1 kann das Permeat der zweiten Membraneinheit 4 daher weiter aufgetrennt, was zu einem besonders reinen Offgas führt.

In der Membraneinheit 1 erfolgt die abschließende Nachbehandlung (anstelle einer herkömmlichen thermischen Nachbehandlung), wobei Retentat und im Gleichstrom gewonnenes Permeat in die zweite Membraneinheit 4 als Feedgas rückgeführt werden und das besonders reine, im Gegenstrom gewonnene Permeat als Offgas über den ersten Permeatausgang 1c direkt in die Umwelt geleitet wird.

Das System zur Schwachgasverwertung kann mit zusätzlichen Membraneinheiten erweitert werden, um eine sogar noch bessere Trennung von Produktgas und Offgas zu ermöglichen. Eine entsprechende bevorzugte Konfiguration um die erste Membraneinheit 1 ist in Fig. 5 gezeigt. Darin ist eine der zweiten Membraneinheit 4 nachgeschaltete dritte Membraneinheit 6 mit einem Gaseingang 6a, einem Retentatausgang 6b und einem Permeatausgang 6c vorgesehen. Das Retentat der zweiten Membraneinheit 4 wird der dritten Membraneinheit 6 als Feedgas zugeführt. Der Permeatausgang 6c der dritten Membraneinheit 6 ist mit der in den zweiten Verdichter 5 führenden Gaszufuhr leitungsmäßig verbunden, wodurch das Permeat der dritten Membraneinheit 6 der zweiten Membraneinheit 4 als Feedgas zugeführt wird. Das Retentat der dritten Membraneinheit 6 wird über den Retentatausgang 6b als Produktgas abgezogen. Das Retentat der zweiten Membraneinheit 4 wird somit noch einmal zusätzlich aufgetrennt. Am oder nach dem Retentatausgang 6b der dritten Membraneinheit 6 kann dabei eine weitere Druckregeleinrichtung 7 vorgesehen sein, wodurch der Druck in der dritten Membraneinheit noch genauer kontrolliert werden kann.

## Patentansprüche

1. Verfahren zum Nachrüsten eines Systems (Sₐₗₜ) zur Schwachgasverwertung, das eine thermische Nachbehandlungseinheit (T) aufweist, wobei das System (Sₐₗₜ) zur Schwachgasverwertung dazu eingerichtet ist, das durch diese Nachbehandlungseinheit (T) thermisch nachbehandelte Schwachgas direkt in die Umwelt zu leiten, umfassend den folgenden Schritt:
Ersetzen der thermischen Nachbehandlungseinheit (T) durch eine erste Membraneinheit (1) zur Nachbehandlung des Schwachgases, so dass das auf diese Weise nachgerüstete System (Sₙₑᵤ) dazu eingerichtet ist, zumindest einen Teil des Permeats der ersten Membraneinheit (1) direkt in die Umwelt zu leiten.

2. Verfahren nach Anspruch 1, wobei die erste Membraneinheit (1) einen Gaseingang (1a) für das durch die erste Membraneinheit nachzubehandelnde Schwachgas, welches durch die Nachbehandlung in Produktgas und Offgas aufgetrennt wird, einen Retentatausgang (1b) für das Produktgas, wobei der Retentatausgang (1b) vorzugsweise im Zuge des Nachrüstens mit dem System (Sₐₗₜ) verbunden wird, und einen ersten Permeatausgang (1c) zur Ableitung von Offgas in die Umwelt aufweist, wobei im Zuge des Nachrüstens der Gaseingang (1a) mit dem System (Sₐₗₜ) zur Schwachgasverwertung leitungsmäßig verbunden wird, wobei die erste Membraneinheit (1) mindestens einen weiteren, vom Gaseingang (1a) stromabwärtsliegenden Permeatausgang (1c') aufweist und der stromabwärtsliegende Permeatausgang (1c') direkt oder indirekt mit dem Gaseingang (1a) der ersten Membraneinheit (1) leitungsmäßig verbunden ist, sodass ein Gasstrom zumindest teilweise vom stromabwärtsliegenden Permeatausgang (1c') in den Gaseingang (1a) der ersten Membraneinheit (1) rückgeführt werden kann.

3. Verfahren nach Anspruch 2, wobei ein der ersten Membraneinheit (1) nachgeschalteter, vorzugsweise drehzahlregelbarer Verdichter (3) vorgesehen ist, wobei der Verdichter (3) ansaugseitig mit dem stromabwärtsliegenden Permeatausgang (1c') verbunden ist und zum Abzug des Permeats über den stromabwärtsliegenden Permeatausgang (1c') eingerichtet ist.

4. Verfahren nach Anspruch 2 oder 3, wobei das System (Sₐₗₜ) bereits vor dem Nachrüsten eine zweite Membraneinheit (4) mit einem Gaseingang (4a), einem Retentatausgang (4b) und einem Permeatausgang (4c) aufweist, wobei im Zuge des Nachrüstens der Permeatausgang (4c) der zweiten Membraneinheit (4) mit dem Gaseingang (1a) der ersten Membraneinheit (1) leitungsmäßig verbunden wird.

5. Verfahren nach Anspruch 4, wobei der zweiten Membraneinheit (4) ein zweiter, vorzugsweise drehzahlregelbarer Verdichter (5) vorgeschaltet ist, wobei der zweite Verdichter (5) mit dem Gaseingang (4a) der zweiten Membraneinheit (4) leitungsmäßig verbunden ist, wobei der Verdichter (3) auslassseitig mit der in den zweiten Verdichter (5) führenden Gaszufuhr leitungsmäßig verbunden ist und wobei im Zuge des Nachrüstens der Retentatausgang (1b) der ersten Membraneinheit (1) mit der in den zweiten Verdichter (5) führenden Gaszufuhr leitungsmäßig verbunden wird.

6. Verfahren nach einem der Ansprüche 1 bis 5, wobei das System (Sₙₑᵤ) zumindest einen ölgeschmierten Verdichter aufweist, vorzugsweise wobei zumindest der der ersten Membraneinheit (1) nachgeschaltete Verdichter (3), falls vorhanden, und/oder der der zweiten Membraneinheit (4) vorgeschaltete zweite Verdichter (5), falls vorhanden, ölgeschmiert sind.

7. System (Sₙₑᵤ) zur Schwachgasverwertung, aufweisend eine erste Membraneinheit (1) zur Nachbehandlung des Schwachgases, wobei das System (Sₙₑᵤ) dazu eingerichtet ist, zumindest einen Teil des Permeats der ersten Membraneinheit (1) direkt in die Umwelt zu leiten.

8. System (Sₙₑᵤ) nach Anspruch 7, wobei die erste Membraneinheit (1) einen Gaseingang (1a) für das durch die erste Membraneinheit nachzubehandelnde Schwachgas, welches durch die Nachbehandlung in Produktgas und Offgas aufgetrennt wird, einen Retentatausgang (1b) für das Produktgas und einen ersten Permeatausgang (1c) zur Ableitung von Offgas in die Umwelt aufweist, wobei die erste Membraneinheit (1) mindestens einen weiteren, vom Gaseingang (1a) stromabwärtsliegenden Permeatausgang (1c') aufweist und der stromabwärtsliegende Permeatausgang (1c') direkt oder indirekt mit dem Gaseingang (1a) der ersten Membraneinheit (1) leitungsmäßig verbunden ist, sodass ein Gasstrom zumindest teilweise vom stromabwärtsliegenden Permeatausgang (1c') in den Gaseingang (1a) der ersten Membraneinheit (1) rückgeführt werden kann.

9. System (Sₙₑᵤ) nach Anspruch 8, wobei am oder nach dem Retentatausgang (1b) eine Druckregeleinrichtung (2) vorgesehen ist.

10. System (Sₙₑᵤ) nach einem der Ansprüche 8 oder 9, wobei ein der ersten Membraneinheit (1) nachgeschalteter, vorzugsweise drehzahlregelbarer Verdichter (3) vorgesehen ist, wobei der Verdichter (3) ansaugseitig mit dem stromabwärtsliegenden Permeatausgang (1c') verbunden ist und zum Abzug des Permeats über den stromabwärtsliegenden Permeatausgang (1c') eingerichtet ist.

11. System (Sₙₑᵤ) nach einem der Ansprüche 8 bis 10, wobei das System (Sₙₑᵤ) zumindest einen ölgeschmierten Verdichter aufweist, vorzugsweise wobei zumindest der der ersten Membraneinheit (1) nachgeschaltete Verdichter (3), falls vorhanden, und/oder der der zweiten Membraneinheit (4) vorgeschaltete zweite Verdichter (5), falls vorhanden, und/oder der der ersten Membraneinheit (1) vorgeschaltete, dritte Verdichter, falls vorhanden, ölgeschmiert sind.

12. Verwendung des Systems nach einem der Ansprüche 8 bis 11 zur Trennung von Schwachgas mit einem Anteil von mehr als 50 Vol.-%, vorzugsweise mehr als 55 Vol.-%, 60 Vol.- %, 65 Vol.-%, 70 Vol.-%, 75 Vol.-%, 80 Vol.-%, 85 Vol.-%, insbesondere bevorzugt mehr als 90 Vol.-% bzw. 95 Vol.-% CH₄/CO₂ und mit einer Methankonzentration nicht über 30 Vol.-% in CH₄-dominiertes Produktgas und CO₂-dominiertes Offgas, wobei das Offgas aus der ersten Membraneinheit (1) in die Umwelt geleitet wird.

13. Verfahren zur Auftrennung von Schwachgas mit einem Anteil von mehr als 50 Vol.- %, vorzugsweise mehr als 55 Vol.-%, 60 Vol.-%, 65 Vol.-%, 70 Vol.-%, 75 Vol.-%, 80 Vol.-%, 85 Vol.-%, insbesondere bevorzugt mehr als 90 Vol.-% bzw. 95 Vol.-% CH₄/CO₂ und mit einer Methankonzentration nicht über 30 Vol.-% in Produktgas und Offgas mittels Gaspermeation durch das System (Sₙₑᵤ) nach einem der Ansprüche 8 bis 11, wobei das Permeat der ersten Membraneinheit (1) teilweise im Gleichstrom und teilweise im Gegenstrom gewonnen wird und das im Gegenstrom gewonnene Permeat als Offgas in die Umwelt geleitet wird.

14. Verfahren nach Anspruch 13, wobei das Retentat der ersten Membraneinheit (1) über einen Retentatausgang (1b) der ersten Membraneinheit (1) und eine dort vorgesehene Druckregeleinrichtung (2) abgezogen wird, wobei der Abzug des im Gleichstrom gewonnenen Permeats in Abhängigkeit von der Konzentration von CH₄ im Offgas gesteuert bzw. geregelt wird.

15. Verfahren nach Anspruch 13 oder 14, wobei das Retentat der ersten Membraneinheit (1) und das im Gleichstrom gewonnen Permeat der ersten Membraneinheit (1) druckbeaufschlagt und der zweiten Membraneinheit (4) als Feedgas zugeführt werden, wobei das Permeat der zweiten Membraneinheit (4) der ersten Membraneinheit (1) als Feedgas zugeführt wird und das Retentat der zweiten Membraneinheit (4) über einen Retentatausgang (4b) der zweiten Membraneinheit (4) abgezogen wird.
